# EUROPEAN PATENT APPLICATION

(11) **EP 4 693 719 A1**
(43) Date of publication of application: **11.02.2026**
(21) Application number: 24800252.9
(22) Date of filing: 03.05.2024
(51) Int. Cl.: H01M 50/595, H01M 10/04

(54) **STACK CELL AND METHOD FOR MANUFACTURING STACK CELL**

(30) Priority: 03.05.2023 KR 20230057695
(71) Applicant: LG Energy Solution, Ltd., Seoul 07335 (KR)
(72) Inventor: CHO, Kwooman, Daejeon 34122 (KR)
(74) Representative: Goddar, Heinz J.
(86) International application number: PCT/KR2024/005981
(87) International publication number: WO 2024/228571

(57) **Abstract**

Disclosed is a stack cell. The stack cell of the present invention comprises: an electrode stack; at least one fixing tape that wraps around the circumference of the electrode stack and fixes the electrode stack; and a step-removing tape that is attached to each of the edge portions of the upper surface of the electrode stack so as to remove a step portion between the fixing tape and the upper surface of the electrode stack.

## Description

### [TECHNICAL FIELD]

This application claims the benefit of priority based on Korean Patent Application No. 10-2023-0057695 filed on May 3, 2023, entire content disclosed in the document of the patent applications is included as a part of this specification.

The present invention relates to a stack cell and a manufacturing method thereof wherein damage or breakage of the stack cell and lithium precipitation are prevented.

### [BACKGROUND ART]

Generally, secondary batteries include an anode, a cathode and an electrolyte, and generate electrical energy using a chemical reaction. The use of secondary batteries is gradually increasing due to their advantage of the ability of charge and discharge. Among these secondary batteries, secondary lithium batteries have a high energy density per unit weight, and are widely used as power sources for electronic communication devices or as driving sources for high-power hybrid vehicles, electric vehicles, etc.

In terms of the shape of these secondary batteries, demand is increasing for prismatic secondary batteries and pouch-type secondary batteries that may be applied to products such as mobile phones due to their thin thickness. In terms of materials of secondary batteries, demand is increasing for lithium secondary batteries such as lithium-ion batteries and lithium-ion polymer batteries with high energy density, discharge voltage and output stability.

The electrode laminate of secondary batteries is manufactured through lamination and stacking process. In the lamination process, a mono-cell is manufactured by pressing an electrode and a separator heated to a high temperature with strong pressure. In the stacking process, a plurality of mono-cells are laminated, and a half-cell is then stacked on the uppermost mono-cell to form an electrode laminate. Here, since the stacked mono-cells and half-cells are very thin, both sides of a plurality of mono-cells and half-cells are bent or spread apart. When taping both sides of the electrode laminate that is bent and lifted, it is difficult to tape the electrode laminate firmly. In addition, when the taping device performs taping while both sides of the electrode laminate are lifted or spread apart, the outermost mono-cell or half-cell may break, the separator may be folded, or wrinkles may occur in the separator.

To solve the above-described problems, a jig device presses the two edges of the electrode laminate, and a taping device tapes the electrode laminate with the fixing tape. However, since the electrode laminate is taped while the two edges of the electrode laminate are pressed by the jig device, the two edges of the electrode laminate cannot be taped. Accordingly, a step as high as the thickness of the fixing tape is present at the edge of the upper surface of the half-cell.

Thereafter, the pressing press presses the taped electrode laminate to bring the electrode into contact with the separator, thereby eliminating the space between the electrode and the separator of the electrode laminate. Here, the pressing press is in direct contact with the fixing tape. However, the pressing press is spaced apart from the edge of the upper surface of the half-cell by a distance equal to the height of the step such that the pressure of the pressing press is hardly applied to the two edges of the electrode laminate. In addition, even when the pressure of the pressing press is increased, it is difficult to sufficiently apply pressure to the two edges of the electrode laminate. Accordingly, when a gap or space is present between the electrode and the separator at the two edges of the electrode laminate, lithium may be precipitated into the gap or space. In addition, when lithium is precipitated in the secondary batteries, it may cause explosion of the secondary batteries.

In addition, a sliding part of the active material layer is formed at the two edges of the electrode. The sliding part is a slanted part that is pushed to both sides of the electrode as the active material layer is pressed by the press roller during the coating process. Since the sliding part is present at the two edges of the electrode laminate, a gap or space is easily formed between the electrode and the separator at the sliding part. Accordingly, the possibility of lithium precipitation at the sliding part located at the two edges of the electrode laminate may significantly increase. Therefore, a technology for applying the pressure of the pressing press to the two edges of the electrode laminate is required.

The background art of the present invention is disclosed in Korean Patent Application Publication No. 2022-0103465 (published on July 22, 2022, titled Electrode Assembly and Secondary Battery Including the Same).

### [DETAILED DESCRIPTION OF THE INVENTION]

### [TECHNICAL PROBLEM]

In order to solve above-described problems, it is an object of the present invention to provide a stack cell and a manufacturing method thereof wherein the same pressure is applied to the upper surface of an electrode laminate when pressing the electrode laminate.

It is an object of the present invention to provide a stack cell and a manufacturing method thereof wherein damage or breaking of the electrode laminate is prevented.

It is an object of the present invention to provide a stack cell and a manufacturing method thereof wherein sliding parts of two sides of the electrode laminate is in contact with a separator.

It is an object of the present invention to provide a stack cell and a manufacturing method thereof wherein gap or space between the sliding part of the active material layer and the separator is almost eliminated.

It is an object of the present invention to provide a stack cell and a manufacturing method thereof wherein lithium precipitation from the stack cell is prevented and the cause of explosion of secondary batteries is eliminated.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, a stack cell according to the present invention includes: an electrode laminate; at least one fixing tape wrapped around the electrode laminate to fix the electrode laminate; and a step relief tape attached to an edge of an upper surface of the electrode laminate to relieve a step between the fixing tape and the upper surface of the electrode laminate.

The step relief tape may be attached to a portion of the edge corresponding to a sliding part of an active material layer.

The step relief tape may be disposed at the edge of the electrode laminate where a tab may be disposed.

The thickness of the step relief tape may be the same as that of the fixing tape.

The width of the step relief tape may be greater than that of a sliding part of the electrode laminate.

The end of a cathode sliding part of the electrode laminate may be disposed outer than that of an anode sliding part.

A stack cell according to the present invention includes: an electrode laminate; at least one fixing tape wrapped around the electrode laminate to fix the electrode laminate; a first step relief tape attached to an edge of an upper surface of the electrode laminate to relieve a step between the fixing tape and the upper surface of the electrode laminate; and a second step relief tape attached to an edge of a lower surface of the electrode laminate to relieve a step between the fixing tape and the lower surface of the electrode laminate.

The first and second step relief tapes may be attached to portions of the edge corresponding to sliding parts of an active material layer, respectively.

The first and second step relief tapes may be disposed at the edges of the electrode laminate where a tab may be disposed.

The thickness of each of the first and second step relief tapes may be the same as that of the fixing tape.

The width of each of the first and second step relief tapes may be greater than that of a sliding part of the electrode laminate.

The end of a cathode sliding part of the electrode laminate may be disposed outer than that of an anode sliding part.

A manufacturing method of the stack cell according to the present invention includes: a laminating step of forming an electrode laminate; a compressing step of pressing two sides of the electrode laminate with a press jig to compress the two sides of the electrode laminate; a fixing step of fixing the electrode laminate by wrapping the electrode laminate with a plurality of fixing tapes; a step relieving step of attaching a step relief tape to an edge of the electrode laminate and relieve a step between the fixing tape and the edge; and a pressing step of pressing the electrode laminate with a press device.

The step relieving step may include attaching a first step relief tape to an edge of an upper surface of the electrode laminate.

The step relieving step may include: a step of attaching a first step relief tape to an edge of an upper surface of the electrode laminate; and a step of attaching a second step relief tape to an edge of a lower surface of the electrode laminate.

The step relief tape may be attached to a portion of the edge of the separator corresponding to a sliding part of an active material layer.

The step relief tape may be disposed at the edge of the electrode laminate where a tab may be disposed.

The thickness of the step relief tape may be the same as that of the fixing tape.

The width of the step relief tape may be greater than that of a sliding part of the mono-cell.

The end of a cathode sliding part of the electrode laminate may be disposed outer than that of an anode sliding part.

### [ADVANTAGEOUS EFFECTS]

According to the present invention, since the step relief tape relieves the steps at two sides of the upper surface of the electrode laminate, the same pressure is applied to the fixing tape and the step relief tape as the press device presses the upper surface of the electrode laminate.

According to the present invention, since the two edges and the center portion of the electrode laminate are pressed with the same pressure, damage or breaking of the electrode laminate may be prevented.

According to the present invention, since the two edges of the electrode laminate are pressed with sufficient pressure, the sliding parts at two sides of the electrode laminate may come into contact with the separator.

According to the present invention, the gap or space between the sliding part of the active material and the separator may be almost eliminated or significantly reduced.

According to the present invention, by eliminating the gap or space between the active material and the separator, lithium precipitation from the stack cell may be prevented, and the cause of explosion of the secondary batteries may be eliminated.

According to the present invention, since the step relief tape relieves the steps on the upper and lower surfaces of the electrode laminate, the same pressure is applied to the fixing tape and the step relief tape as the press device presses the electrode laminate.

In addition to the advantageous effects described above, specific effects of the present invention will be described further while describing specific details of the present invention.

### [BRIEF DESCRIPTION OF DRAWINGS]

FIG. 1 schematically illustrates a process of coating an active material on an electrode current collector according to the present invention.
FIG. 2 schematically illustrates a sliding part provided at an end of an active material coated on an electrode current collector according to the present invention.
FIG. 3 schematically illustrates an electrode laminate according to the present invention.
FIG. 4 schematically illustrates an area of a cathode active material being larger than that of an anode active material of the electrode laminate of FIG. 3.
FIG. 5 schematically illustrates the area of the anode active material being larger than that of the cathode active material in the electrode laminate of FIG. 3.
FIG. 6 schematically illustrates the electrode laminate of FIG. 3 is taped with a fixing tape.
FIG. 7 schematically illustrates a taping device absorbing a fixing tape according to the present invention.
FIG. 8 schematically illustrates the taping device of FIG. 7 taping an electrode laminate with a fixing tape.
FIG. 9 schematically illustrates an electrode laminate taped with a fixing tape according to the present invention.
FIG. 10 schematically illustrates an electrode laminate according to a first embodiment of the present invention.
FIG. 11 is a perspective view schematically illustrating a step relief tape attached to an edge of the electrode laminate of FIG. 10.
FIG. 12 schematically illustrates the electrode laminate of FIG. 10 being pressed by a press device.
FIG. 13 schematically illustrates a press device pressing the electrode laminate with a step relief tape attached to an edge of the electrode laminate of FIG. 10.
FIG. 14 schematically illustrates an electrode laminate according to a second embodiment of the present invention.
FIG. 15 is a flow chart schematically illustrating a manufacturing method of an electrode laminate according to the present invention.

### [DESCRIPTION OF REFERENCE NUMERALS]

11: current collector
12: active material layer
13: sliding part
20: press roller
30: taping device
31: mounting base
32: press jig
35: taping module
36: suction body
37: adsorption part
38: taping lever
39: taping roller
40: press device
100: stack cell
110: electrode laminate
111: cathode
112: anode
113: separator
115: mono-cell
116: half-cell
117: tab
118: edge
120: fixing tape
130: step relief tape
131: first step relief tape
132: second step relief tape

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, an apparatus according to an embodiment of the present invention will be described.

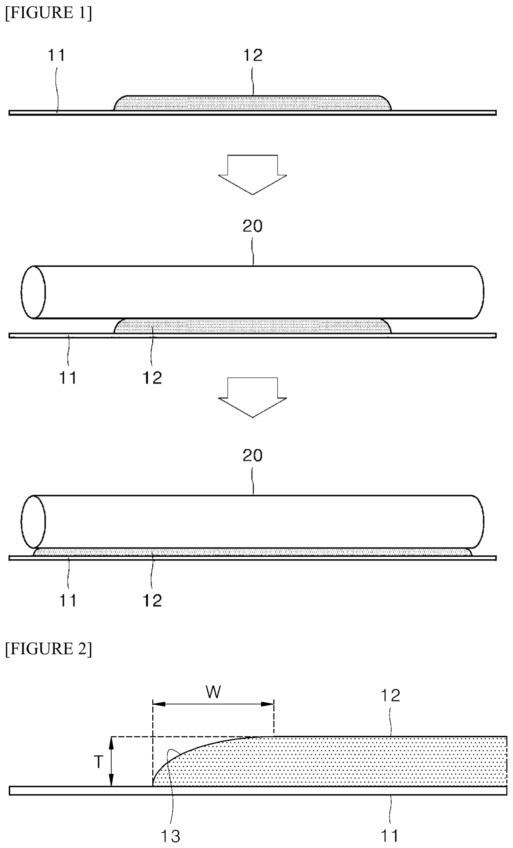

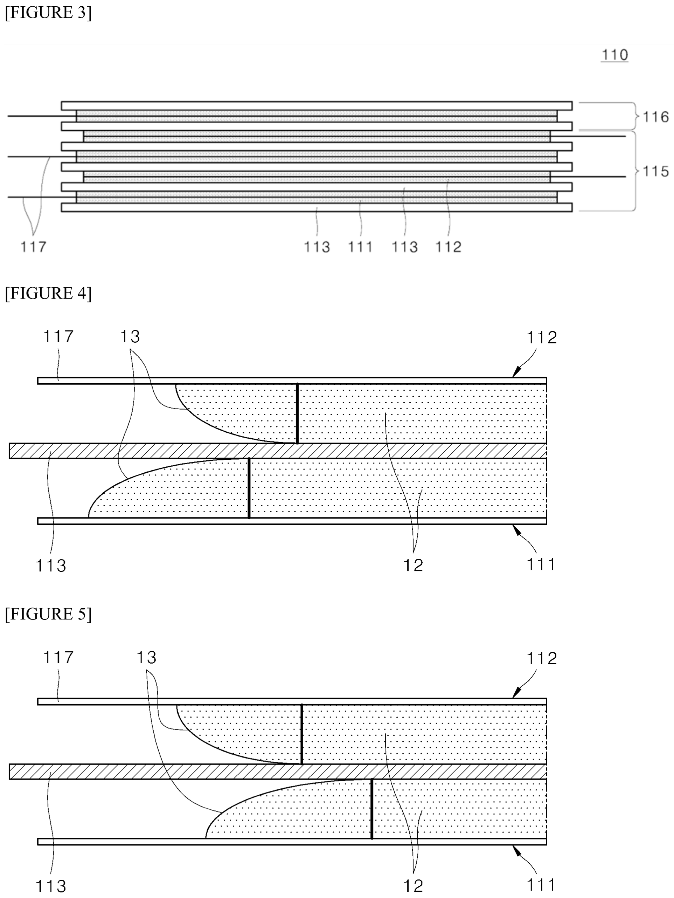

FIG. 1 schematically illustrates a process of coating an active material on an electrode current collector according to the present invention. FIG. 2 schematically illustrates a sliding part provided at an end of an active material coated on an electrode current collector according to the present invention, FIG. 3 schematically illustrates an electrode laminate according to the present invention, FIG. 4 schematically illustrates an area of a cathode active material being larger than that of an anode active material of the electrode laminate of FIG. 3, and FIG. 5 schematically illustrates the area of the anode active material being larger than that of the cathode active material in the electrode laminate of FIG. 3.

Referring to FIGS. 1 to 5, a stack cell 100 according to an embodiment of the present invention includes: an electrode laminate 110; a fixing tape 120; and a step relief tape 130.

The electrode laminate 110 is manufactured by a coating process, a notching process, a lamination process and a stacking process (lamination and stacking process). The electrode laminate 110 may be formed by stacking a plurality of unit cells on a long sheet-shaped separator with a constant gap therebetween and then winding the separator in one direction (stacking and folding process). In addition, the electrode laminate 110 may be formed by stacking a plurality of unit cells on a long sheet-shaped separator and then zigzag-stacking the separator (zigzag stacking process). The present invention may be applied to electrode laminates of various structures as long as the fixing tape and the step relief tape are attached to the electrode laminate. Below, the case where the electrode laminate 110 is manufactured by the lamination and stacking process will be described.

In the coating process, an active material 12 is coated onto electrodes 111 and 112. The electrodes 111 and 112 include an anode 112 and a cathode 111. The anode 112 is manufactured by applying an anode active material 12 to an anode current collector 11. The anode current collector 11 may include an aluminum material. The cathode 111 is manufactured by applying a cathode active material 12 to a cathode current collector 11. The cathode current collector 11 may include a copper material.

In the coating process, an active material is applied to the electrode current collector 11. The electrode current collector 11 includes a cathode current collector and an anode current collector. When the electrode current collector 11 is transported, a press roller 20 presses the active material in a high-temperature state against the electrode current collector 11. As the active material is pressed, the active material flows while being thinned towards both sides of the electrode current collector 11. Here, an active material portion in a slanted shape is provided at each of the two edges 118 of the electrode current collector 11, and the slanted active material portion is called a sliding part 13. The height (T: see FIG. 2) of the sliding part 13 may gradually decrease toward the outer end of the electrodes 111 and 112. The sliding part 13 is formed due to the gap between the electrode current collector 11 and the press roller 20. The sliding part 13 is provided with a width W of approximately several mm to several tens of mm at the edges 118 of the electrode current collector 11. The width W of the sliding part 13 may vary depending on the component of the active material 12, the viscosity of the active material, the pressure of the press roller 20, the thickness of the active material coating layer, etc. As the electrode current collector 11 to which the active material 12 is applied passes through a drying process, the electrode is manufactured. The electrode is provided with a coated portion coated with an active material and a non-coated portion without an active material. The non-coated portion is provided at the two edges 118 of the electrode.

The electrodes 111 and 112 are transported to undergo the notching process. In the notching process, a notching device cuts the non-coated portions of the electrodes 111 and 112 at constant intervals to form tabs 117. The tabs 117 are arranged at constant intervals along the lengthwise direction of the electrodes 111 and 112. The tabs 117 may have a fixed width and length. The electrodes 111 and 112 provided with the tabs 117 are wound on a rewinder and then transported to undergo the lamination process.

In the lamination process, a battery cell is manufactured. Battery cells may be classified into mono-cell, bi-cell, full-cell, and half-cell. The mono-cell 115 has a structure in which a separator 113, a cathode 111, a separator 113, and an anode 112 are sequentially stacked. The bi-cell has a structure in which electrodes of the same polarity are stacked on the two outermost surfaces. The full-cell has a structure in which electrodes of different polarities are stacked on the two outermost surfaces, respectively. In addition, the half-cell 116 has a structure in which a separator 113, a cathode 111, and a separator 113 are stacked. Below, the case where a mono-cell 115 and a half-cell 116 are stacked into an electrode laminate 110 is described. The battery cell is transported to undergo the stacking process. The mono-cell 115 and the half-cell 116 are transported to undergo the stacking process.

A plurality of mono-cells 115 are laminated, and a half-cell 116 is laminated on the uppermost mono-cell 115. The plurality of mono-cells 115 and the half-cell 116 form the electrode laminate 110. A mono-cell 115 is the lowermost layer of the electrode laminate 110, and a half-cell 116 is the uppermost layer of the electrode laminate 110.

In the electrode laminate 110, a cathode active material 12 and an anode active material 12 are attached to two sides of a separator 113, respectively. Here, the area of the cathode active material 12 of the cathode 111 in contact with the separator 113 is larger than that of the anode active material 12 of the anode 112 in contact with the separator 113 (see FIG. 4). In addition, the sliding part 13 of the cathode active material 12 extends outer than that of the anode active material 12. Accordingly, lithium precipitation from the mono-cell 115 may be prevented.

When the area of the cathode active material 12 of the cathode 111 in contact with the separator 113 is smaller than that of the anode active material 12 of the anode 112 in contact with the separator 113 (see FIG. 5), lithium may be precipitated from the mono-cell 115, which may cause an explosion of the battery cell.

Next, a stack cell according to a first embodiment of the present invention will be described.

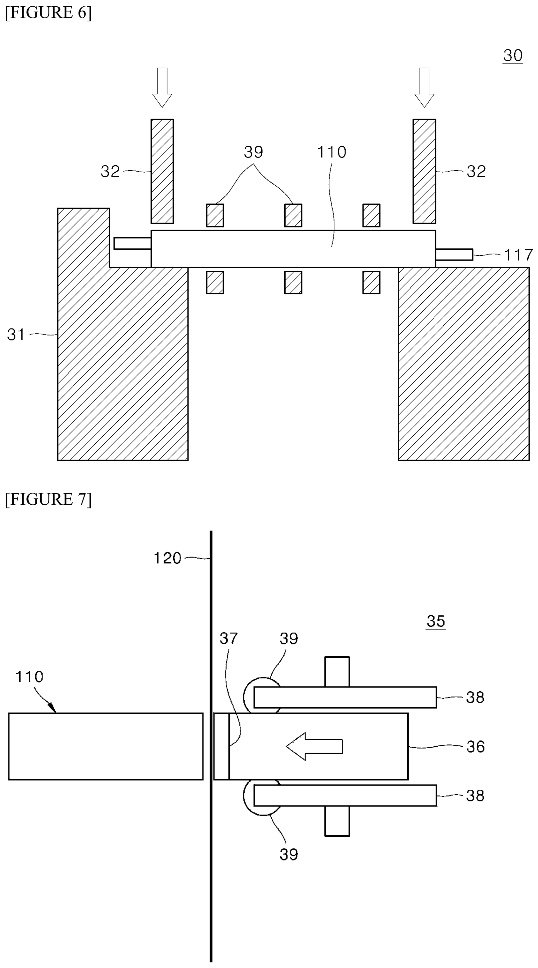

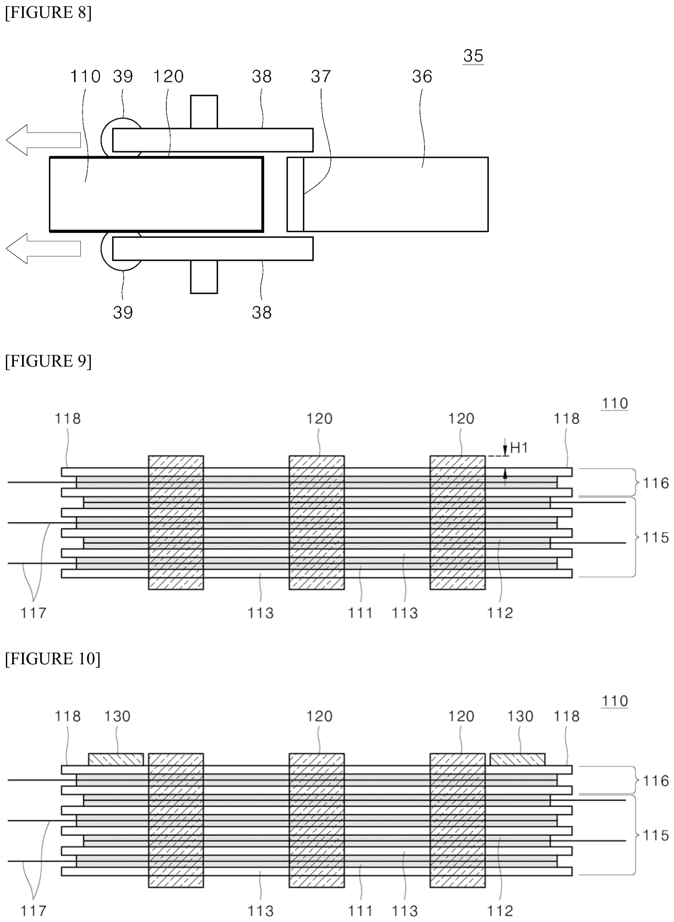

FIG. 6 schematically illustrates the electrode laminate of FIG. 3 is taped with a fixing tape, FIG. 7 schematically illustrates a taping device absorbing a fixing tape according to the present invention, FIG. 8 schematically illustrates the taping device of FIG. 7 taping an electrode laminate with a fixing tape, and FIG. 9 schematically illustrates an electrode laminate taped with a fixing tape according to the present invention.

Referring to FIGS. 6 to 9, a stack cell 100 includes: an electrode laminate 110; at least one fixing tape 120; and a step relief tape 130.

The electrode laminate 110 is transported to the taping device 30. The taping device 30 includes: a mounting base 31; a press jig 32; and a taping module 35. The upper surface of the mounting base 31 is provided with a mounting surface for fixing the electrode laminate 110. The press jig 32 is installed above the mounting base 31 so as to be movable vertically.

The tapping module 35 includes: a suction body 36; a plurality of taping levers 38; and a plurality of taping rollers 39. The suction body 36 includes: an adsorption part 37 that absorbs a fixing tape 120. The suction body 36 is installed so as to be movable to the mounting base 31. The plurality of taping levers 38 is arranged above and below the suction body 36, and is installed so as to reciprocatable at a space between the mounting bases 31. The taping roller 39 is installed at the end of the corresponding taping lever 38.

When the press jig 32 presses the two edges 118 of the electrode laminate 110, the suction body 36 adsorbs the fixing tape 120. Thereafter, the suction body 36 and the plurality of taping levers 38 move toward the electrode laminate 110 and stop at the taping position. Here, the suction body 36 corresponds to one widthwise end of the electrode laminate 110, and a pair of taping levers 38 are arranged above and below the suction body 36. In addition, the pair of taping rollers 39 is in contact with the upper and lower surfaces of the suction body 36, respectively. When the pair of taping levers 38 are moved to upper and lower sides of the electrode laminate 110, the taping roller 39 brings the fixing tape 120 into contact with the upper and lower surfaces of the electrode laminate 110. Since the taping module 35 adheres the fixing tape 120 to the electrode laminate 110 with the press jig 32 pressing the two sides of the electrode laminate 110 to compress the two sides of the electrode laminate 110, the upper surface of the electrode laminate 110, for example, the outermost mono-cell 115 and the half-cell 116, may be prevented from damage or breaking. In addition, the outermost separator 113 of the electrode laminate 110 may be prevented from being folded, and the separator 113 may be prevented from being wrinkled.

At least one fixing tape 120 may be attached between the two edges 118 of the electrode laminate 110. The fixing tape 120 wraps the electrode laminate 110 to fix a plurality of mono-cells 115 and half-cells 116. In FIG. 9, a configuration is illustrated in which three fixing tapes 120 are attached to the electrode laminate 110. However, the number of attached fixing tapes 120 may vary depending on the length and stacking height of the electrode laminate 110.

In addition, the fixing tape 120 may be made of a porous material to allow lithium ions to pass through. Accordingly, the degradation of the charge and discharge performance of the secondary batteries may be prevented as lithium ions pass through the fixing tape 120 during charge and discharge of the secondary batteries.

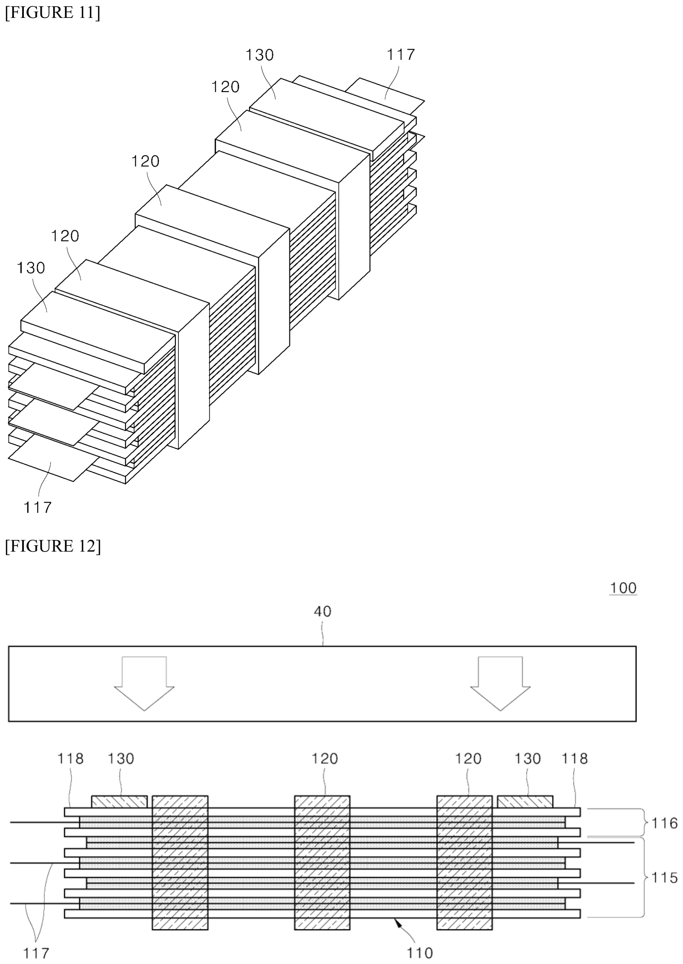

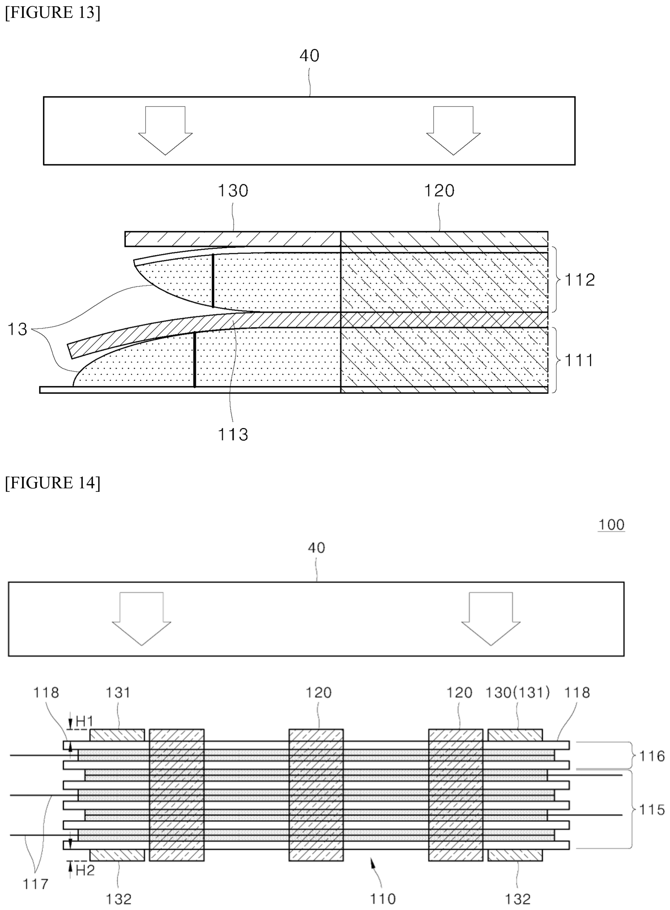

FIG. 10 schematically illustrates an electrode laminate according to a first embodiment of the present invention, FIG. 11 is a perspective view schematically illustrating a step relief tape attached to an edge of the electrode laminate of FIG. 10, FIG. 12 schematically illustrates the electrode laminate of FIG. 10 being pressed by a press device, and FIG. 13 schematically illustrates a press device pressing the electrode laminate with a step relief tape attached to an edge of the electrode laminate of FIG. 10.

Referring to FIGS. 10 to 13, a step exists at two sides of the upper surface of the electrode laminate 110 as high as a thickness H1 of the fixing tape 120. The fixing tape 120 protrudes upward from the upper surface of a half-cell 116 by the thickness H1. The fixing tape 120 has a width of approximately 30 mm. Here, the step exists at the two edges 118 of the upper surface of the uppermost half-cell 116 of the electrode laminate 110.

The step relief tape 130 is attached to each of the two edges 118 of the upper surface of the electrode laminate 110 to relieve the step between the fixing tape 120 and the upper surface of the electrode laminate 110. The step relief tape 130 may be made of the same material as the fixing tape 120. In addition, the step relief tape 130 may be the same as the fixing tape 120 except for the different attachment location. It is apparent that the step relief tape 130 may be made of a material different from that of the fixing tape 120.

In addition, the step relief tape 130 may be made of a porous material such that lithium ions may pass through. Accordingly, the degradation of the charge and discharge performance of the secondary batteries may be prevented as lithium ions pass through the step relief tape during charge and discharge of the secondary batteries.

Since the step relief tape 130 relieves the steps at two sides of the upper surface of the electrode laminate 110, the same pressure is applied to the fixing tape 120 and the step relief tape 130 as the press device 40 presses the upper surface of the electrode laminate 110. Accordingly, since the two edges 118 of the electrode laminate 110 are pressed with sufficient pressure, the sliding parts 13 at two sides of the electrode laminate 110 may come into contact with the separator 113. Furthermore, the gap or space between the sliding part 13 of the active material 12 and the separator 113 may be almost eliminated or significantly reduced. By eliminating the gap or space between the active material 12 and the separator 113, lithium precipitation from the stack cell 100 may be prevented, and the cause of explosion of the secondary batteries may be eliminated.

The step relief tape 130 is attached to the outer surface of the electrode laminate 110 to correspond to the sliding part 13 of the active material 12. For example, when the electrode laminate 110 is constituted by a plurality of mono-cells 115 and half-cells 116, the step relief tape 130 is attached to the outer surface of the mono-cell 115 to correspond to the sliding part 13 of the active material 12. Accordingly, when the press device 40 presses the upper surface of the electrode laminate 110, the step relief tape 130 may sufficiently deliver the pressure to the entire sliding part 13. As the sliding part 13 is pressed via the step relief tape 130, the bonding area between the sliding part 13 and the separator 113 may increase. In addition, as the sliding part 13 is pressed with sufficient pressure, the sliding part 13 may be bonded to the separator 113 in a flat, pressed state.

The step relief tape 130 is disposed at the edge where tab 117 is placed in the electrode laminate 110. Here, tab 117 and step relief tape 130 are disposed on two lengthwise sides of electrode laminate 110.

The thickness H1 of the step relief tape 130 is the same as the thickness H1 of the fixing tape 120. The upper surface of the step relief tape 130 and the upper surface of the fixing tape 120 form the same plane. Accordingly, since the pressure of the press device 40 is uniformly applied to the step relief tape 130 and the fixing tape 120, the sliding part 13 of the active material 12 and the inner side portion of the active material 12 may be pressed with the same pressure. In addition, since a uniform pressure is applied to the electrode laminate 110 as a whole, damage or breaking of the electrode laminate 110 may be prevented. In particular, damage to the uppermost half-cell 116 of the electrode laminate 110 may be prevented.

The width of the step relief tape 130 is greater than the width (W: see FIG. 2) of the sliding part 13 of the electrode laminate 110. Accordingly, when the press device 40 presses the upper surface of the electrode laminate 110, the step relief tape 130 may sufficiently deliver the pressure to the entire sliding part 13. In addition, the bonding area of the sliding part 13 and the separator 113 may be increased.

In the electrode laminate 110, the end portion of the cathode sliding part 13 is disposed outer than that of the anode sliding part 13 (see FIG. 4). Accordingly, since the area of the cathode active material 12 is larger than that of the anode active material 12, lithium precipitation in secondary batteries may be prevented.

Next, a stack cell according to a second embodiment of the present invention will be described. The second embodiment is substantially the same as the first embodiment except for the step relief tape such that the same reference numerals are given to the same elements and the descriptions thereof are omitted.

FIG. 14 schematically illustrates an electrode laminate according to a second embodiment of the present invention.

Referring to FIG. 14, the stack cell 100 includes: an electrode laminate 110; at least one fixing tape 120; a first step relief tape 131; and a second step relief tape 132.

At least one fixing tape 120 may be attached between the two edges 118 of the electrode laminate 110. The fixing tape 120 wraps the electrode laminate 110 to fix a plurality of mono-cells 115 and half-cells 116. In FIG. 14, a configuration is illustrated in which three fixing tapes 120 are attached to the electrode laminate 110. However, the number of attached fixing tapes 120 may vary depending on the length and stacking height of the electrode laminate 110.

Steps as high as the thicknesses H1 and H2 of the fixing tape 120 exist on the upper and lower surfaces of the electrode laminate 110. The fixing tape 120 protrudes upward from the upper surface of the electrode laminate 110 by the thickness H1, and the fixing tape 120 protrudes downward from the lower surface of the electrode laminate 110, for example, the lowermost mono-cell 115, by the thickness H2. The fixing tape 120 has a width of approximately 30 mm. Here, the steps exist at the two edges 118 of the uppermost half-cell 116 of the electrode laminate 110 and at the two edges 118 of the lowermost mono-cell 115 of the electrode laminate 110.

The first step relief tape 131 is attached to each of the two edges 118 of the upper surface of the electrode laminate 110 to relieve the step between the fixing tape 120 and the upper surface of the electrode laminate 110. Since the first step relief tape 131 relieves the steps at two sides of the upper surface of the electrode laminate 110, the same pressure is applied to the fixing tape 120 and the first step relief tape 131 as the press device 40 presses the upper surface of the electrode laminate 110. Accordingly, since the two edges 118 of the upper surface of the electrode laminate 110 are pressed with sufficient pressure, the sliding parts 13 at two sides of the electrode laminate 110 may come into contact with the separator 113. Furthermore, the gap or space between the sliding part 13 of the active material 12 and the separator 113 may be almost eliminated or significantly reduced. By eliminating the gap or space between the active material 12 and the separator 113, lithium precipitation from the stack cell 100 may be prevented, and the cause of explosion of the secondary batteries may be eliminated.

The second step relief tape 132 is attached to each of the two edges 118 of the lower surface of the electrode laminate 110 to relieve the step between the fixing tape 120 and the lower surface of the electrode laminate 110. Since the second step relief tape 132 relieves the steps at two sides of the lower surface of the electrode laminate 110, the same reaction force is applied to the fixing tape 120 and the second step relief tape 132 as the press device 40 presses the lower surface of the electrode laminate 110. Accordingly, since the two edges 118 of the lower surface of the electrode laminate 110 are pressed with sufficient pressure, the sliding parts 13 at two sides of the electrode laminate 110 may come into contact with the separator 113. Furthermore, the gap or space between the sliding part 13 of the active material 12 and the separator 113 may be almost eliminated or significantly reduced. By eliminating the gap or space between the active material 12 and the separator 113, lithium precipitation from the stack cell 100 may be prevented, and the cause of explosion of the secondary batteries may be eliminated.

The first step relief tape 131 and the second step relief tape 132 may be made of the same material as the fixing tape 120. In addition, the first step relief tape 131 and the second step relief tape 132 may be the same as the fixing tape 120 except for the different attachment location. It is apparent that the first step relief tape 131 and the second step relief tape 132 may be made of a material different from that of the fixing tape 120.

The first step relief tape 131 and the second step relief tape 132 may be made of a porous material such that lithium ions may pass through. Accordingly, the degradation of the charge and discharge performance of the secondary batteries may be prevented as lithium ions pass through the first step relief tape 131 and the second step relief tape 132 during charge and discharge of the secondary batteries.

As described above, the first step relief tape 131 and the second step relief tape 132 relieve the step at the edge 118 of the upper surface and the edge 118 of the lower surface of the electrode laminate 110 such that the bonding area between the sliding part 13 of the electrode laminate 110 and the separator 113 may be further increased.

The first step relief tape 131 and the second step relief tape 132 are attached to the outer surface of the mono-cell 115 to correspond to the sliding part 13 of the active material 12. Accordingly, when the press device 40 presses the upper surface of the electrode laminate 110, the first step relief tape 131 and the second step relief tape 132 may sufficiently deliver the pressure to the entire sliding part 13. As the sliding part 13 is pressed via the step relief tape 130, the bonding area between the sliding part 13 and the separator 113 may increase. In addition, as the sliding part 13 is pressed with sufficient pressure, the sliding part 13 may be bonded to the separator 113 in a flat, pressed state.

The first step relief tape 131 and the second step relief tape 132 are disposed at the edge where tab 117 is placed in the electrode laminate 110. Here, tab 117, the first step relief tape 131 and the second step relief tape 132 are disposed on two lengthwise sides of electrode laminate 110.

The thicknesses H1 of the first step relief tape 131 and the second step relief tape 132 are the same as the thickness H1 of the fixing tape 120. The upper surface of the first step relief tape 131 and the upper surface of the fixing tape 120 form the same plane. The lower surface of the second step relief tape 132 and the lower surface of the fixing tape 120 form the same plane. Accordingly, since the pressure of press device 40 is uniformly applied to the step relief tape 130 and the fixing tape 120, the sliding part 13 of the active material 12 and the inner side portion of the active material 12 may be pressed with the same pressure.

The widths of the first step relief tape 131 and the second step relief tape 132 are greater than the width (W: see FIG. 2) of the sliding part 13 of the electrode laminate 110. Accordingly, when the press device 40 presses the upper surface of the electrode laminate 110, the step relief tape 130 may sufficiently deliver the pressure to the entire sliding part 13. In addition, the bonding area of the sliding part 13 and the separator 113 may be increased.

In the electrode laminate 110, the end portion of the cathode sliding part 13 is disposed outer than that of the anode sliding part 13. Accordingly, since the area of the cathode active material 12 is larger than that of the anode active material 12, lithium precipitation in secondary batteries may be prevented.

A manufacturing method of the stack cell according to the present invention described above will be described.

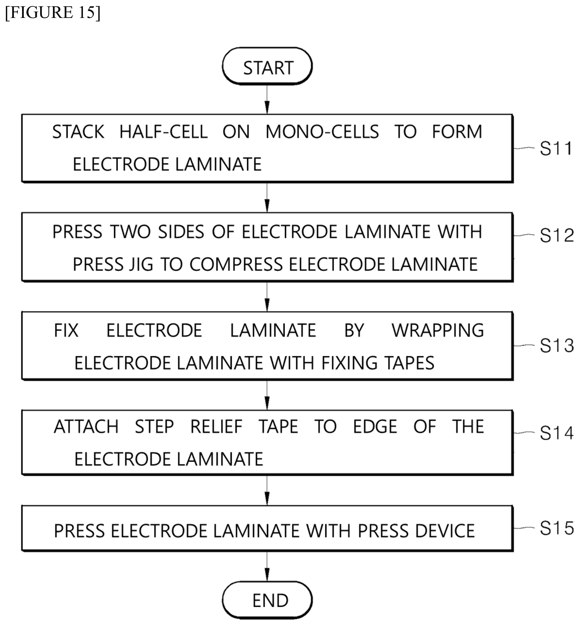

FIG. 15 is a flow chart schematically illustrating a manufacturing method of an electrode laminate according to the present invention.

Referring to FIG. 15, in the manufacturing method of the stack cell 100 according to the present invention, a plurality of battery cells are stacked to form an electrode laminate (S11). For example, a half-cell 116 is stacked on a plurality of mono-cells 115 to form an electrode laminate 110.

A press jig 32 presses two sides of the electrode laminate 110 to compress the two sides of the electrode laminate 110 (S12). Accordingly, the two edges 118 of the electrode laminate 110 may be compressed.

A taping module 35 wraps the electrode laminate 110 with a plurality of fixing tapes 120 to fix the electrode laminate 110 (S13). Here, the suction body 36 adsorbs the fixing tapes 120, and the suction body 36 and the taping lever 38 stop at the taping position of the electrode laminate 110. When the taping lever 38 moves to upper and lower sides of the electrode laminate 110, the taping roller 39 attaches the fixing tape 120 to the upper and lower surfaces of the electrode laminate 110. The number of attached fixing tapes 120 may vary depending on the length and stacking height of the electrode laminate 110.

The taping module 35 attaches the step relief tape 130 to the edge 118 of the electrode laminate 110 to relieve the step between the fixing tape 120 and the edge 118 (S14). Since the step relief tape 130 relieves the step, the same pressure is applied to the fixing tape 120 and the step relief tape 130 as the press device 40 presses the upper surface of the electrode laminate 110.

The press device 40 presses the electrode laminate 110 to remove the gap or space between the separator 113 and the active material 12 (S15). Accordingly, since the two edges 118 of the electrode laminate 110 are pressed with sufficient pressure, the sliding parts 13 at two sides of the electrode laminate 110 may come into contact with the separator 113. Furthermore, the gap or space between the sliding part 13 of the active material 12 and the separator 113 may be almost eliminated or significantly reduced.

In the step relieving step S14, the first step relief tape 131 is attached to the edge 118 of the upper surface of the electrode laminate 110 to relieve the step between the fixing tape 120 and the half-cell 116. Since the first step relief tape 131 relieves the step, the same pressure is applied to the fixing tape 120 and the first step relief tape 131 as the press device 40 presses the upper surface of the electrode laminate 110. Accordingly, since the two edges 118 of the electrode laminate 110 are pressed with sufficient pressure, the sliding parts 13 at two sides of the electrode laminate 110 may come into contact with the separator 113. Furthermore, the gap or space between the sliding part 13 of the active material 12 and the separator 113 may be almost eliminated or significantly reduced. By eliminating the gap or space between the active material 12 and the separator 113, lithium precipitation from the stack cell 100 may be prevented, and the cause of explosion of the secondary batteries may be eliminated.

In addition, in the step relieving step S14, the first step relief tape 131 may be attached to the edge 118 of the upper surface of the electrode laminate 110, and the second step relief tape 132 may be attached to the edge 118 of the lower surface of the electrode laminate 110. Accordingly, when the press device 40 presses the upper surface of the electrode laminate 110, the first step relief tape 131 and the second step relief tape 132 may sufficiently deliver the pressure to the entire sliding part 13. As the sliding part 13 is pressed via the step relief tape 130, the bonding area between the sliding part 13 and the separator 113 may increase. In addition, as the sliding part 13 is pressed with sufficient pressure, the sliding part 13 may be bonded to the separator 113 in a flat, pressed state.

The step relief tape 130 is attached to the outer surface of the mono-cell 115 to correspond to the sliding part 13 of the active material 12. Accordingly, when the press device 40 presses the upper surface of the electrode laminate 110, the step relief tape 130 may sufficiently deliver the pressure to the entire sliding part 13.

The step relief tape 130 is disposed at the edge where tab 117 is placed in the electrode laminate 110. Here, tab 117 and step relief tape 130 are disposed on two lengthwise sides of electrode laminate 110.

The thickness of step relief tape 130 is the same as that of fixing tape 120. The upper surface of step relief tape 130 and the upper surface of fixing tape 120 form the same plane. Accordingly, since the pressure of press device 40 is uniformly applied to step relief tape 130 and fixing tape 120, the sliding part 13 of the active material 12 and the center portion at the inner side of the corresponding active material 12 may be pressed with the same pressure.

The width of the step relief tape 130 is greater than the width W of the sliding part 13 of the mono-cell 115. Accordingly, when the press device 40 presses the upper surface of the electrode laminate 110, the step relief tape 130 may sufficiently deliver the pressure to the entire sliding part 13. In addition, the bonding area of the sliding part 13 and the separator 113 may be increased.

In the electrode laminate 110, the end portion of the cathode sliding part 13 is disposed outer than that of the anode sliding part 13. Accordingly, since the area of the cathode active material 12 is larger than that of the anode active material 12, lithium precipitation in secondary batteries may be prevented.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A stack cell, comprising:
an electrode laminate;
at least one fixing tape wrapped around the electrode laminate to fix the electrode laminate; and
a step relief tape attached to an edge of an upper surface of the electrode laminate to relieve a step between the fixing tape and the upper surface of the electrode laminate.

2. The stack cell of claim 1, wherein the step relief tape is attached to a portion of the edge of the electrode laminate corresponding to a sliding part of an active material layer.

3. The stack cell of claim 1, wherein the step relief tape is disposed at the edge of the electrode laminate where a tab is disposed.

4. The stack cell of claim 1, wherein a thickness of the step relief tape is same as that of the fixing tape.

5. The stack cell of claim 1, wherein a width of the step relief tape is greater than that of a sliding part of the electrode laminate.

6. The stack cell of claim 1, wherein an end of a cathode sliding part is disposed outer than that of an anode sliding part, inthe electrode laminate.

7. A stack cell, comprising:
an electrode laminate;
at least one fixing tape wrapped around the electrode laminate to fix the electrode laminate;
a first step relief tape attached to an edge of an upper surface of the electrode laminate to relieve a step between the fixing tape and the upper surface of the electrode laminate; and
a second step relief tape attached to an edge of a lower surface of the electrode laminate to relieve a step between the fixing tape and the lower surface of the electrode laminate.

8. The stack cell of claim 7, wherein the first and second step relief tapes are attached to portions of the edge of the electrode laminate corresponding to sliding parts of an active material layer.

9. The stack cell of claim 7, wherein the first and second step relief tapes are disposed at the edges of the electrode laminate where a tab is disposed.

10. The stack cell of claim 7, wherein a thickness of each of the first and second step relief tapes is same as that of the fixing tape.

11. The stack cell of claim 7, wherein a width of each of the first and second step relief tapes is greater than that of a sliding part of the electrode laminate.

12. The stack cell of claim 7, wherein an end of a cathode sliding part is disposed outer than that of an anode sliding part, in the electrode laminate.

13. A manufacturing method of a stack cell, comprising:
a laminating step of forming an electrode laminate;
a compressing step of pressing two sides of the electrode laminate with a press jig to compress the two sides of the electrode laminate;
a fixing step of fixing the electrode laminate by wrapping the electrode laminate with a plurality of fixing tapes;
a step relieving step of attaching a step relief tape to an edge of the electrode laminate and relieve a step between the fixing tape and the edge; and
a pressing step of pressing the electrode laminate with a press device.

14. The manufacturing method of claim 13, wherein the step relieving step comprises attaching a first step relief tape to an edge of an upper surface of the electrode laminate.

15. The manufacturing method of claim 13, wherein the step relieving step comprises:
a step of attaching a first step relief tape to an edge of an upper surface of the electrode laminate; and
a step of attaching a second step relief tape to an edge of a lower surface of the electrode laminate.

16. The manufacturing method of claim 13, wherein the step relief tape is attached to a portion of the edge of a separator of the electrode laminate corresponding to a sliding part of an active material layer.

17. The manufacturing method of claim 13, wherein the step relief tape is disposed at the edge of the electrode laminate where a tab is disposed.

18. The manufacturing method of claim 13, wherein a thickness of the step relief tape is same as that of the fixing tape.

19. The manufacturing method of claim 13, wherein a width of the step relief tape is greater than that of a sliding part of the electrode laminate.

20. The manufacturing method of claim 13, wherein an end of a cathode sliding part is disposed outer than that of an anode sliding part, in the electrode laminate.
